# NEUE EUROPÄISCHE PATENTSCHRIFT

(11) **EP 0 567 495 B2**
(45) Veröffentlichungstag und Bekanntmachung des Hinweises auf die Entscheidung über den Einspruch: **17.01.2001**
(45) Hinweis auf die Patenterteilung: 05.04.1995
(21) Anmeldenummer: 92902550.0
(22) Anmeldetag: 17.01.1992
(51) Int. Cl.: A01C 17/00

(54) **VERFAHREN UND VORRICHTUNG ZUR ERMITTLUNG DER FÜR EINE GEWÜNSCHTE STREUBREITE UND STREUMENGE BENÖTIGTEN EINSTELLWERTE EINES DÜNGERSTREUERS FÜR EINE DÜNGERSORTE**
METHOD AND DEVICE FOR DETERMINING, FOR A PARTICULAR FERTILISER TYPE, THE FERTILISER-SPREADER SETTINGS NECESSARY FOR THE REQUIRED WIDTH AND DENSITY OF COVERAGE
PROCEDE ET DISPOSITIF POUR DETERMINER, POUR UN TYPE PARTICULIER D'ENGRAIS, LES VALEURS DE REGLAGE D'UN EPANDEUR D'ENGRAIS NECESSAIRES POUR OBTENIR LA LARGEUR ET LA QUANTITE D'EPANDAGE VOULUES

(30) Priorität: 18.01.1991 DE 4101367; 19.02.1991 DE 4105046
(43) Veröffentlichungstag der Anmeldung: 03.11.1993
(73) Patentinhaber: Amazonen-Werke H. Dreyer GmbH & Co. KG, 49205 Hasbergen (DE)
(72) Erfinder: SCHEUFLER, Bernd, D-4507 Hasbergen-Gaste (DE)
(74) Vertreter: Grünecker, Kinkeldey, Stockmair & Schwanhäusser Anwaltssozietät
(86) Internationale Anmeldenummer: EP9200088
(87) Internationale Veröffentlichungsnummer: WO9212620

(56) Entgegenhaltungen:
- EP-A- 0 093 986
- EP-A- 0 309 062
- EP-A- 0 438 202
- DE-A- 3 310 424
- DE-A- 3 641 080
- NL-A- 8 702 289
- US-A- 4 693 122

## Beschreibung

Die Erfindung betrifft ein Verfahren zur Ermittlung der für eine gewünschte Streubreite und Streumenge benötigten Einstellwerte eines Düngerstreuers für eine Düngersorte und hierfür geeignete Vorrichtungen.

In der Landwirtschaft werden sehr große Mengen Mineraldünger ausgebracht. Hierfür muß sehr viel Geld ausgegeben werden. Das Ziel ist es deshalb, den kostenintensiven Mineraldünger so zu verteilen, daß er von den Pflanzen optimal genutzt werden kann.

Für die Ausbringung der Mineraldünger sind im Laufe der Zeit die verschiedenartigsten Verteiltechniken entwickelt worden. Hierbei haben sich insbesondere die Pneumatikdüngerstreuer und die Zentrifugaldüngerstreuer durchgesetzt. Damit der Mineraldünger möglichst zielgenau verteilt wird, muß beispielsweise am Zentrifugaldüngerstreuer eine Einstellung vorgenommen werden, die berücksichtigt, mit welcher Arbeitsbreite gestreut und welche Düngersorte ausgebracht werden soll. Die Problematik besteht nun darin, daß die Stoffeigenschaften und die Streueigenschaften der verschiedenen Dünger sehr stark schwanken, so daß die Einstellung jeder auszubringenden Düngersorte korrigiert werden muß. Die Veränderung der Stoffeigenschaften ist für den Landwirt jedoch nicht ohne weiteres erkennbar.

Die Landwirtschaft ist eng mit der Umwelt verbunden. Die Forderungen nach einer umweltverträglichen Landwirtschaft werden immer lauter. In diesen Zusammenhang werden auch zu hohe Mineraldüngergaben genannt. Sie tragen nicht nur zur Überproduktion bei, sondern sind auch ein nicht zu verachtender Faktor bei der Umweltbelastung. Zudem sind ein wesentlicher Teil der Produktionskosten Düngungskosten. Ziel muß es also sein, eine umwelt- und ertragsgerechte Düngung vorzunehmen. Heute wird im allgemeinen nach dem Prinzip der Aufdüngung verfahren, d.h. der Landwirt bringt aufbauend, auf dem vorhandenen Nährstoffbedarf im Boden, so viel Mineraldünger aus, daß er mit Sicherheit den erwarteten Ertrag erreicht. Er bringt also mehr Dünger aus, als tatsächlich verbraucht wird, und dieses führt unvermeidbar zu einem zusätzlichen Vorrat im Boden und zu einer erhöhten Auswaschung an Nährstoffen. Um nun den Dünger weniger umweltbelastend verteilen zu können, muß zunächst die Voraussetzung geschaffen werden, den Düngerstreuer optimal auf den auszubringenden Dünger einzustellen. Die erforderliche Einstellung des Zentrifugaldüngerstreuers ist abhängig von der gewünschten Ausbringmenge, der gewünschten Arbeitsbreite, der Mineraldüngersorte und Beschaffenheit. Ohne weiteres kann ein Düngerstreuer im Hinblick auf die Ausbringmenge und die gewünschte Arbeitsbreite sehr einfach eingestellt werden, wenn die Mineraldüngersorte und deren Beschaffenheit bekannt ist. Die Problematik bei der Maschineneinstellung liegt jedoch in den Änderungen der Mineraldüngerbeschaffenheit. Die physikalischen Eigenschaften des Mineraldüngers, die die Maschineneinstellung entscheidend beeinflussen, sind von vielen Parametern abhängig. Viele diese Eigenschaften, wie Korngrößenspektrum, Beschaffenheit der Kornoberfläche, Schüttgewicht und Reingewicht beeinflußt der Hersteller bzw. der Produktionsprozeß für die Herstellung des Düngers. Andere Eigenschaften, wie z.B. der Feuchtegehalt werden durch den Transport und die Lagerung beeinflußt.

Eine erste Hilfe den Streuer richtig einzustellen sind die von den Maschinenherstellern herausgegebenen Streutabellen, in welchen eine Vielzahl von Düngern und die hierfür vorgesehene Einstellung angeben sind. Diese Streutabellen werden anhand einwandfreier Düngerware, die die Machinenhersteller von den verschiedenen Düngerherstellern beziehen in aufwendiger Weise mit vielen Tonnen Dünger anhand von Streuversuchen auf den Streuständen erstellt.

Anhand dieser von den Düngerherstellern herausgegebenen Streutabellen kann der Landwirt die Maschine einstellen, wenn er den Hersteller der Ware kennt, z.B. Kalkamonsalpeter einer bestimmten Firma und sich dieser Mineraldünger auch noch in einem einwandfreien Zustand befindet. Dieses ist leider nicht immer der Fall. Vielfach ist es so, daß der Hersteller des Düngers nicht bekannt ist oder der Mineraldünger sich nicht in einem einwandfreien Zustand befindet.

Derzeit kann der Landwirt die Einstellung seines Düngerstreuers mit einem sog. mobilen Prüfstand überprüfen. Dieses ist eine Möglichkeit, die jedoch von den Landwirten nicht ausreichend angenommen wird. Darüberhinaus ist es mit diesem mobilen Prüfstand sehr schwierig, wenn man den Hersteller des Düngers nicht kennt oder der Mineraldünger durch Transport und Lagerung seinen Zustand erheblich im Vergleich zu seinen ursprünglichen, einwandfreien Zustand verändert hat, die richtige Einstellung zu finden.

Um jetzt hier Abhilfe zu schaffen, wird derzeit mit sehr vielen Tonnen Dünger auf den Streuprüfständen der Düngerstreuerhersteller der Düngerstreuer abgestreut und in vielen Versuchen die optimale Einstellung des Düngerstreuers ermittelt.

Diese Methode ist sehr teuer und zeitintensiv.

Der Erfindung liegt daher die Aufgabe zugrunde, auf einfache Weise ein Verfahren zu schaffen, und hierfür entsprechende Vorrichtungen aufzuzeigen, anhand dem dem Landwirt auf einfachste Weise eine ausreichend klare Information gegeben werden kann, wie der Düngerstreuer für das Ausbringen eines bestimmten Düngers einzustellen ist.

Diese Aufgabe wird erfindungsgemäß durch die Kennzeichen des Verfahrensanspruches 1 bzw. des Vorrichtungsanspruches 6 gelöst.

Bei einer vorteilhaften Ausführungsform der Erfindung, läßt sich gleichzeitig mit einem Rechner anhand der dügerspezifischen Werte das zuerwartende Streubild (Verteilung des Düngers über die vorgesehene Arbeitsbreite) mit dem zuwerartenden VK-Wert (Varitionskoefeffenizent) ermitteln und ausdrucken.

Hierbei ist nach der Erfindung vorgesehen, daß die ermittelten Werte in eine mathematische Formel eingesetzt werden und so die Einstellwerte zum Einstellen des Düngerstreuers ermittelt werden. Anhand der ermittelten Werte kann so auf einfachste Weise, beispielsweise über einen einfachen Rechenvorgang oder über Tabellen oder über einen Rechner die Einstellung des Düngerstreuers ermittelt werden, wenn zunächst die düngerspezifischen Werte gefunden worden sind.

Gemäß der Erfindung werden die ermittelten düngerspezifischen Werte mit zuvor erfaßten Vergleichswerten verglichen und aus diesem Vergleichsergebnis erfolgt eine Zuordnung zu den Einstellwerten zum Einstellen des Düngerstreuer. Hierbei ist es also nach dem erfindungsgemäßen Verfahren möglich mit sehr geringen Düngermengen, beispielsweise wenigen kg, wie z.B. 2 - 5 kg sicher die Einstellung des Düngerstreuers für diese bestimmte Düngermenge zu bestimmen. Es ist also nicht mehr erforderlich, mehrere Tonnen Dünger mit den Düngerstreuer abzustreuen, um die richtige Einstellung des Düngerstreuers zu finden.

Hierbei ist vorgesehen, daß wenigstens zwei von denen einer das Reibrollverhalten ist, für den Dünger spezifische physikalische Werte ermittelt werden. Aufgrund dieser ermittelten spezifischen physikalischen Düngerwerte wird dann auf die Einstellung des Düngerstreuers geschlossen.

Bei der Ermittlung der Einstellwerte des Düngerstreuer in praktischen Streuversuchen, wird der Dünger von dem Verteilorgan verteilt und dieser verteilte Dünger mit Auffangvorrichtungen eines Düngerprüfstandes aufgefangen und die Querverteilung des Düngers über seine Streu- und/oder Arbeitsbreite ermittelt, parallel hierzu werden mittels Proben des gleichen Düngers (gleiche Düngercharge) die spezifischer Werte ermittelt. Diese gefundenen spezifischen Werte jeder Düngersorte werden den mit den gleichen Dünger für den Düngerstreuer gefundenen Einstellwerten für den Düngerstreuer jeweils zugeordnet.

Hierbei konnen neben dem Reibrollverhalten des Düngers die spezifischen Werte können die die Schwebegeschwindigkeit des Düngers, die Reindichte, die Schüttdichte, das Korngößenspektrum, und/oder der Schüttwinkel des Düngers sein.

In einfachster Weise ist vorgesehen, daß die ermittelten spezifischen Werte und die ermittelten Einstellwerte für jeden Dünger bzgl. der Arbeitsbreite einander bzgl. der jeweils gleichen Düngersorte zugeordnet in einen Speicher eines Rechners (Computer) oder in Tabellen abgelegt werden, daß die aktuell ermittelten spezifischen Werte mit dem abgelegten spezifischen Werten verglichen werden, und daß nach diesem Vergleich auf die aktuellen Einstellwerte des Düngerstreuers für den aktuell auszubringenden Dünger geschlossen wird.

Wenn bei der Ermittlung und Errechnung der Einstellwerte des Düngerstreuers mehrere Einstellungen gefunden werden sollten, so errechnet der Rechner automatisch einen Mittelwert, welcher dem optimalen Einstellwert ausreichend nahe kommt, um eine gleichmäßige Düngerverteilung zu gewährleisten. Zusätzlich zu den Einstelldaten ermittelt der Rechner das zu erwartende Straubildprofil mit dem zuerwartenden VK-Wert mit einer Genauigkeit von +/- 2%.

Die erfindungsgemäße Vorrichtung zeichnet sich insbesondere dadurch aus, daß wenigstens zwei Meßvorrichtungen vorgesehen sind, und daß mit diesen Meßvorrichtungen zumindest zwei der (physikalischen) düngerspezifischen Werte von denen einer das Reibrollverhalten ist, ermittelbar ist.

Somit ist also ein Verfahren und eine Vorrichtung zum Ermitteln der Streustoffeigenschaften des Düngers geschaffen worden, mit dem anhand einer Düngerprobe mit kleinen Mengen (nur wenige kg) die Einstellung des Düngerstreuers in einfachster Weise ermittelbar ist.

Weitere Einzelheiten der Erfindung sind den übrigen Unteransprüchen, der Beispielsbeschreibung und den Zeichnungen zu entnehmen. Hierbei zeigen
- Fig. 1: die Erfassung und Zuordnung der Maschineneinstellung zu den physikalischen Streueigenschaften in einen Computer in einem schematischen Schaubild,
- Fig. 2: die schematische Darstellung der Ermittlung der Maschineneinstellung über die physikalischen Stoffeigenschaften und einem Computer in einem Schaubild,
- Fig. 3: die Schleuderscheibe des in Fig. 2 abgebildeten Schleuderdüngerstreuers in der Draufsicht,
- Fig. 4: eine Vorrichtung zur Ermittlung des Fließverhaltens des Düngers in Prinzipdarstellung,
- Fig. 5: eine Vorrichtung zur Ermittlung des Reibrollenverhaltens des Düngers in Prinzipdarstellung als Explosionszeichnung,
- Fig. 6: die Vorrichtung zur Ermittlung der Reindichte des Düngers in perspektivischer Darstellung,
- Fig. 7: die einzelnen Elemente der Vorrichtung für die Bestimmung der Reindichte des Düngers in perspektivischer Darstellung,
- Fig. 8: die Vorrichtung zur Ermittlung des Korngrößenspektrumes des Düngers in perspektivischer Darstellung,
- Fig. 9: die Vorrichtung zur Ermittlung der Schüttdichte des Düngers in perspektivischer Darstellung,
- Fig. 10: die Vorrichtung zur Ermittlung des Schüttwinkels des Düngers in perspektivischer Darstellung,
- Fig. 11: die Vorrichtung zur Ermittlung der Schwebegeschwindigkeit des Düngers in Prinzipdarstellung,

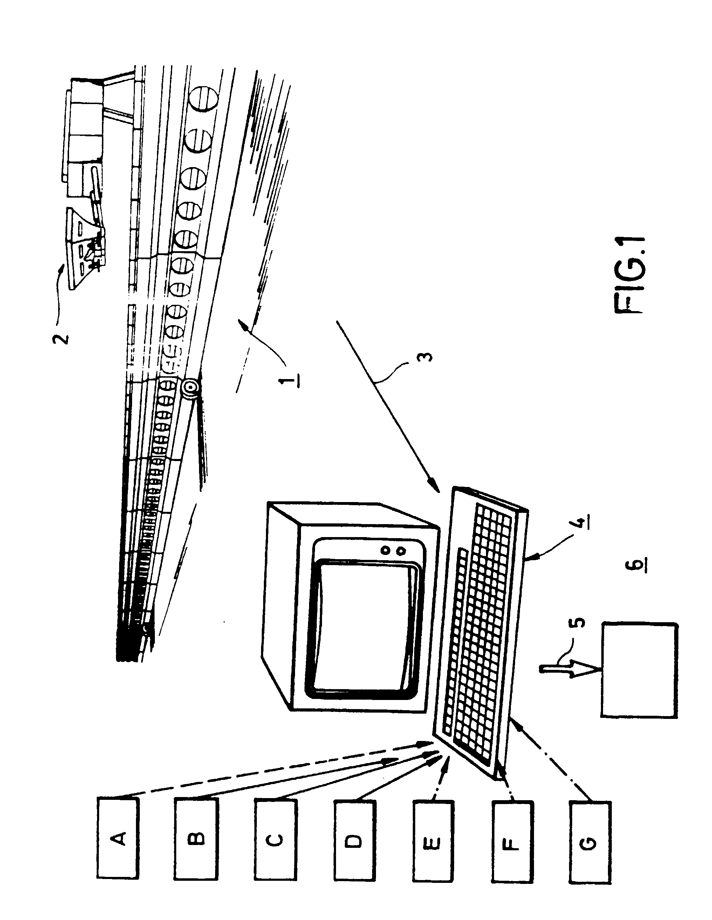

Die Fig. 1 zeigt in einem Schaubild die Erstellung der erforderlichen Daten für die Datenbank. Auf dem Prüfstand 1 werden die Einstelldaten für den Schleuderdüngerstreuer 2 für jede Arbeitsbreite bzgl. jedes Düngers ermittelt. Hierbei werden je nach Maschinentyp die Anbauhöhe, der Anbauwinkel der Maschine sowie die erforderlichen Streuscheiben und gegebenenfalls die erforderliche Winkeleinstellung der Wurfschaufeln sowie Schaufellänge ermittelt, um eine gleichmäßige Düngerverteilung über die gewünschte Arbeitsbreite zu erreichen. Diese Daten werden, wie der Pfeil 3 symbolisiert in den Rechner 4 eingegeben und in seinem Speicher abgelegt. Zur Ermittlung der Einstellwerte des Düngerstreuers 2 für die verschiedenen Arbeitsbreiten sind sehr große Mengen Dünger erforderlich.

Desweiteren werden in dem Rechner 4 die physikalischen Werte für den Dünger ermittelt und ebenfalls dem Speicher des Rechners 4 abgelegt. Wie durch die Kästchen mit den Bezeichnungen A, B, C , D, E, F, G und den Pfeilen symbolisiert werden diese Werte in den Speicher des Rechners 4 abgelegt. Das Symbol A stellt für den charakteristischen Wert des Fließverhaltens des Düngers. Da Symbol B steht für den charakteristischen Wert des Reibrollenverhaltens des Düngers. Das Symbol C stellt für den charakteristischen Wert der Reindichte des Düngers. Das Symbol D steht für Korngrößenspektrum des Düngers. Das Symbol E steht für die Schüttdichte des Düngers. Das Symbol F steht für den charakteristischen Wert des Schüttwinkels des Düngers. Das Symbol G steht für den charakteristischen Wert der Schwebegeschwindigkeit des Düngers.

Diese Daten je Dünger werden dann, wie durch den Pfeil 5 sybolisiert, über den Computer 4 in der Datenbank 6 abgelegt.

Die mit durchzogenen Strichen dargestellten Pfeile symbolisieren, daß diese düngerspezifischen Werte nach derzeitigen Ergebnissen besonders gute Aussagekraft haben und daher in jedem Fall über den Rechner 4 in der Datenbank 6 abgelegt werden sollten. Sinnvoll ist es für verschiedene Maschinen, wie durch den mit unterbrochenen Linien dargestellten Pfeil symbolisiert, den Wert mit dem Symbol A in der Datenbank 6 abzulegen.

Die Ermittlungen der physikalischen Düngereigenschaften gemäß den Symbolen A bis G werden in Einzelnen weiter unten näher erläutert.

Über den Speicher des Rechners 4 wird also in der Datenbank 6 eine Zuordnung zwischen dem auf dem Streuerprüfstand 1 ermittelten verschiedenen Maschineneinstellungen für eine bestimmte Düngersorte zu den physikalischen charakteristischen Düngereigenschaften geschaffen.

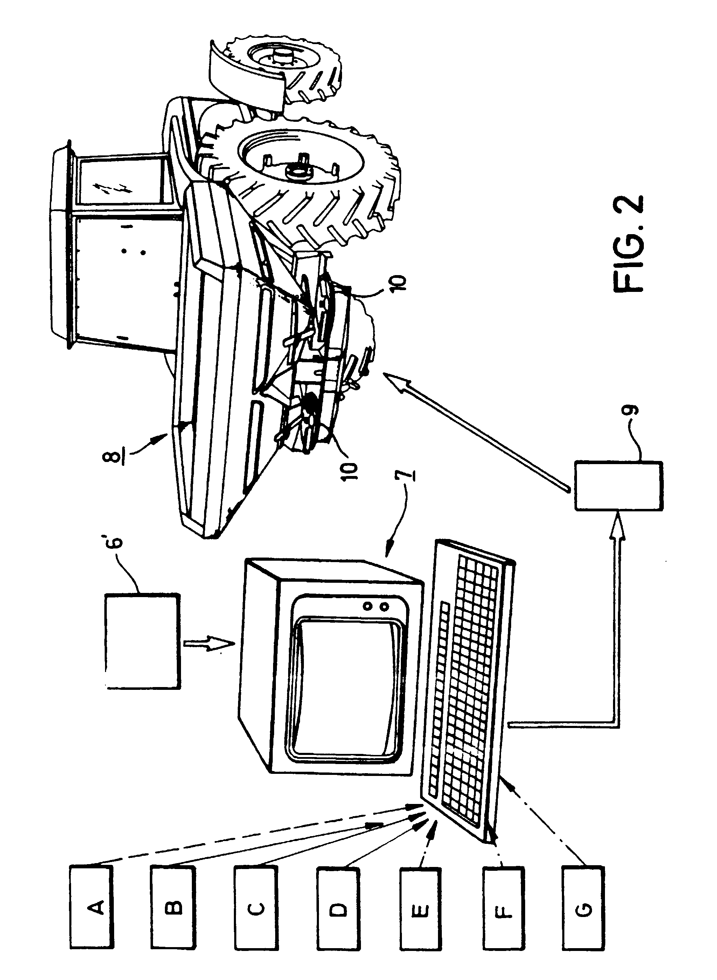

Wie das Schaubild gemäß Fig. 2 zeigt, ist es über die oder einige der charakteristischen Düngereigenschaften gemäß den Symbolen A bis G möglich über die Datenbank 6 und einen Rechner 7 ohne weiteres wieder auf die Einstelldaten für die Maschineneinstellung unter Berücksichtigung der gewünschten Arbeitsbreite für den Düngerstreuer 8 für das Ausbringen eines speziellen Düngers zu schließen. Hierbei hat sich durch umfangreiche Versuche gezeigt, daß insbesondere das Reibrollenverhalten (Symbol B), die Reindichte (Symbol C) und das Korngrößenspektrum (Symbol D), wie auch die mit durchzogenen Linien dargestellten Pfeile symbolisieren, die derzeit eindeutigsten Aussagen über die Streueigenschaften eines Düngers geben und das Fließverhalten zusätzlich eine eindeutige Aussage über die Ausbringmenge in Abhängigkeit der Öffnungsweite der Auslauföffnung gibt. Die Einstellung der Ausbringmenge läßt sich jedoch bei einigen Düngerstreuern mit einer guten Abdrehmöglichkeit auch nach wie vor relativ einfach mit der bekannten Abdrehprobe, falls diese einfach an einem Düngerstreuer durchführbar ist, durchführen. Das Feststellen des Fließverhaltens ist insbesondere von Bedeutung bei den Düngerstreuern, bei denen sich eine Abdrehprobe nicht sehr einfach durchführen läßt.

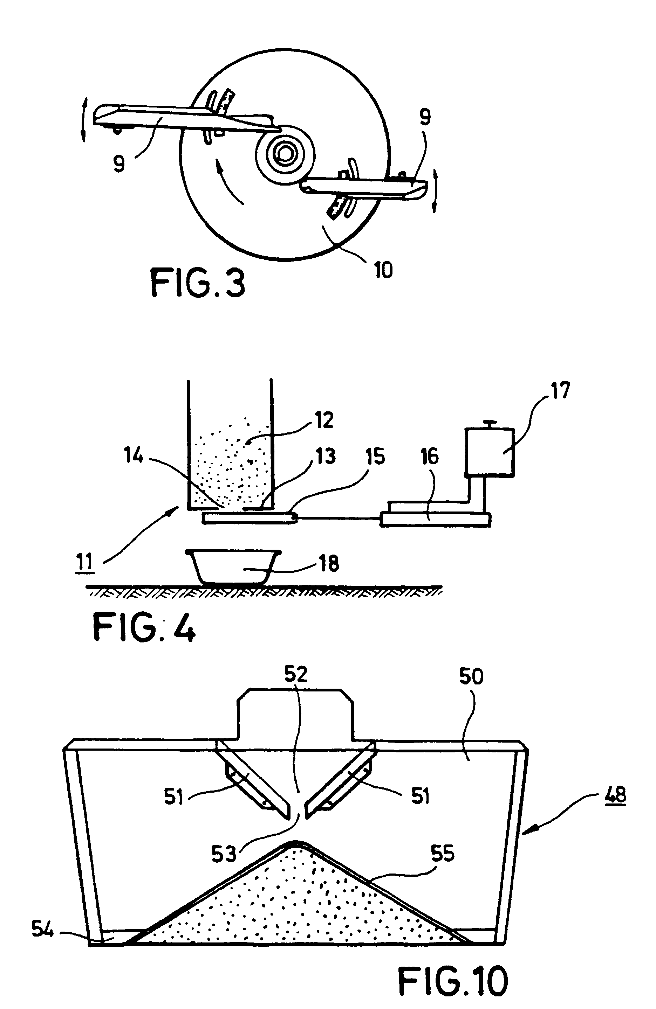

Zur Ermittlung der Einstelldaten für einen Düngerstreuer (wie Anbauhöhe, Anbauwinkel, Winkeleinstellung der Schaufeln sowie Schaufellage oder Auswahl der Schleuderscheiben oder Drehzahl der Schleuderscheiben) wird also so vorgegangen, daß mit einer relativ kleinen Düngermenge, beispielsweise 2 - 5 kg über entsprechende Vorrichtungen die charakteristischen Werte für das Reibrollenverhalten, die neindichte und das Korngrößenspektrum bestimmt wird. Diese ermittelten Werte werden dann in den Rechner 7 eingeben. Der Rechner 7 vergleicht dann diese aktuell eingegebenen Daten mit den sich in der Datenbank 6 eingespeicherten und sich in seinem Speicher befindlichen Daten und ordnet diese ermittelten aktuellen Daten für den auszubringenden Dünger den abgespeicherten charakteristischen Werten zu und erkennt hieraus den Dünger und schließt von hier aus auf die aktuellen Einstelldaten für den Düngerstreuer. Aufgrund dieser von dem Rechner 7 beispielsweise in einem Schreibprotokoll 9 ausgegebenen Einstelldaten kann dann der Schleuderdüngerstreuer 8 eingestellt werden. Beispielsweise sind die Wurfschaufeln 9 der Schleuderscheibe 10, von der in Fig. 3 eine dargestellt ist, des Schleuderstreuers 8 nach den ausgegebenen Einstelldaten einzustellen.

Gleichzeitig kann mit dem Schreibprotokoll 9 zusätzlich zu den Einstelldaten auch das zu erwartende Streubildprofil mit dem zu erwartenden VK-Wert (Genauigkeit +/- 2%) ausgedruckt werden. Somit bekommt der Benutzer des Düngerstreuers genaue Aussagen über die zu erwartende Düngerverteilung aufgrund der anhand der phyaikalischen Düngereigenschaften ermittelten Einstelldaten für den Düngerstreuer.

Im Folgenden soll dieses noch weiter erläutert werden:

Hierbei werden zunächst die Verfahren und Vorrichtung für die Ermittlung der verschiedenen physikalischen Dünger charakeristischen Werte vorgestellt:

Die Messung des Fließverhaltens des Düngers gibt eine eindeutige Auskunft über die Ausbringmenge bei einer bestimmten Schieberstellung des Dosierschiebers eines Düngerstreuers. Es besteht ein eindeutiger linearer Zusammenhang zwischen der Ausbringmenge und dem Fließverhalten des Düngers. Es ist also durch die Messung des Fließverhaltens eines Mineraldüngers direkt auf die Ausbringmenge bei einer bestimmten Schieberstellung zu schließen. Das Fließverhalten wird mit der in Fig. 4 schematisch dargestellten Vorrichtung 11 durchgeführt. Dieses Gerät besteht aus einem Gestell (welches nicht dargestellt ist), auf dem der Behälter 12 aufgebaut ist. Der Behälter 12 ist unten mit einem Boden 13 verschlossen. In dem Boden befindet sich die definierte kreisrunde Öffnung 14, die mit einem Schieber 15 zu öffnen und zu verschließen ist. Dieser Schieber 15 wird über den elektrischen Zylinder 16 geöffnet oder geschlossen. Der Zylinder steht mit einer Steuerlektronik 17 in Verbindung. Über die Steuerelektronik 17 wird der Zylinder 16 betätigt, so daß über den Schieber 15 die Auslauföffnung 14 zu öffnen bzw. zu schließen ist. Über die Steuerelektronik 17 wird, nachdem der Behälter 12 mit dem Dünger, dessen Fließverhalten bestimmt werden soll, gefüllt ist, für eine bestimmte Zeit geöffnet. Nach Ablauf dieser bestimmten Zeit wird über den Schieber 15 die Öffnung 14 verschlossen. Durch die kreisrunde Öffnung 14 fällt der Dünger in den Auffangbehälter 18, der unterhalb der Öffnung 14 sich befindet, aufgefangen. Der ausgelaufene Dünger wird von dem Auffangbehälter 18 aufgefangen und anschließend, wenn der Schieber die Auslauföffnung wieder verschlossen hat, gewogen. Als Ergebnis ergibt sich die pro Zeiteinheit aus der Auslauföffnung herausgeflossene Menge Dünger in g/sec ist. Dieser charakteristische Wert, der das Fließverhalten des Düngers beschreibt, ist für jede Düngersorte charakteristisch. Dieser Wert wird in die Datenbank eingespeichert. Darüberhinaus kann erforderlichenfalls über ein entsprechendes Umrechnungsverfahren, welches noch später näher erläutert wird ohne weiteres auf die Einstellung der Dosierschieber bei einem Düngerstreuer geschlossen werden

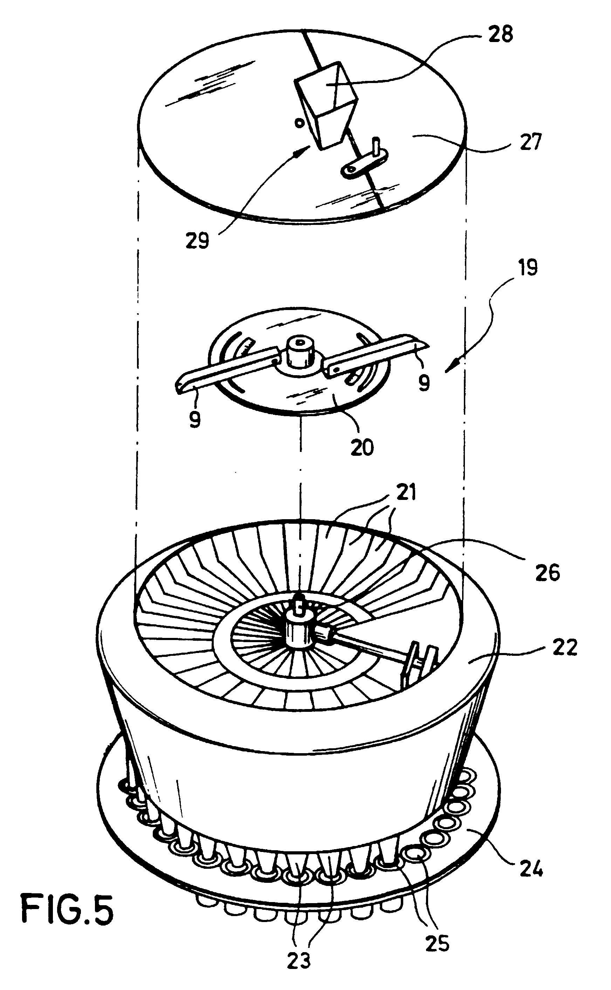

Mit dem in Fig. 5 dargestellten Gerät 19 läßt sich über die Bestimmung des Abwurfwinkels des Düngers von einer Schleuderscheibe 20 der Parameter für das Reibrollenverhalten des Düngers auf der Schleuderscheibe und in der Wurfschaufel des Düngerstreuers feststellen. Durch eine entsprechend fein abgestufte Aufteilung der Düngersegmentkammern 2 ergeben sich eindeutige Aussagen über das Verhalten des jeweiligen Düngers auf der Schleuderscheibe und in der Wurfschaufel. Dieser Abwurfwinkelmesser 19 besteht aus einem runden Gehäuse 22, das in der verwendeten Versuchsausführung in 10° Abständen in Fächer 21 unterteilt ist. Eine feinere Unterteilung, beispielsweise in 5° Abständen bringt noch bessere Aussagewerte. Die Fächer 21 münden unten in den Trichtern 23. Unter den Trichtern 23 befindet sich ein drehbarer Kranz 24, in dem sich in entsprechenden Abständen Becher 25 befinden, die die Aufgabe haben, den Mineraldünger aufzufangen. Diese Becher sind unten mit einem nicht dargestellten Drehschieber verschlossen. Zum Entleeren der Becher wird der Kranz 24 von Hand gedreht. Ein Öffnungsmechanismus öffnet jeweils einen Drehschieber. Der Mineraldünger fällt dann auf eine darunter angeordnete, jedoch nicht dargestellten Waage, die sich unterhalb des Drehkranzes 24 befindet.

In der Mitte des Gehäuses 22 befindet sich die Antriebswelle 26 für die Streuscheibe 20, die der Streuscheibe eines Düngerstreuers entspricht. Die Streuscheibe 20 läßt sich in einfacher Weise auswechseln. Die Streuscheibe 20 wird auf die Antriebswelle 26 aufgesteckt und mittels einer Schraube gesichert. Der Antrieb der Schleuderscheibe 20 erfolgt mittels eines Elektromotors. Die Drehzahl ist entsprechend der Drehzahl der Schleuderscheiben 20 der Schleuderdüngerstreuer gemäß Fig. 1 und 2.

Der Abwurfwinkelmesser 19 ist mit dem abnehmbaren Deckel 27 verschlossen. Der Deckel 27 enthält einen Trichter 28, der den Mineraldünger, der getestet werden soll, aufnehmen kann und einen Öffnungsmechanismus 29, der in Form und Anordnung des Düngerstreuers entspricht, so daß die gleichen geometrischen Verhältnisse des Abwurfwinkelmessers 19 gegeben sind, wie bei dem Düngerstreuer gemäß Fig. 1 und 2.

Die Messung wird folgendermaßen ausgeführt: In den Trichter 28 des Abwurfwinkelmessers 19 wird ein 1dm³ Mineraldünger eingefüllt. Der Elektromotor, der die Streuscheibe 20 antreibt, wird eingeschaltet. Der Öffnungsschieber 29 im Deckel 27 wird geöffnet und der Mineraldünger fällt auf die Schleuderscheibe 20, von wo er aus über die Streuschaufeln 9 in die einzelnen Trichter geschleudert wird. Ist der Trichter 28 auf dem Deckel 27 vollständig entleert, wird der Elektromotor abgeschaltet. Anschließend wird der Deckel 27 entfernt, und falls erforderlich, wird der sich auf den Kanten der Fächer 21 befindliche Dünger vorsichtig in die Fächer 21 geschoben. Anschließend beginnt der Wiegevorgang. Der Drehkranz 24 wird soweit gedreht, daß der Öffnungsmechanismus eines Bechers 25 die Öffnung freigibt und der darin enthaltene Mineraldünger aus dem Becher 25 auf die Waage fällt. Die Menge wird gewogen und notiert. Anschließend wird dieser Vorgang so oft wiederholt, bis alle Becher 25 entleert sind. Das Ergebnis dieser Messung wird über eine entsprechendes Progamm in einem Rechner ausgewertet. Der sich ergebende Wert über eine Summenverteilung und Häufigkeit ergibt eine eindeutige Aussage über das Reibrollenverhalten des Düngers auf der Wurfschaufel. Dieser Wert wird, wie Fig. 1 veranschaulicht, in die Datenbank gespeichert.

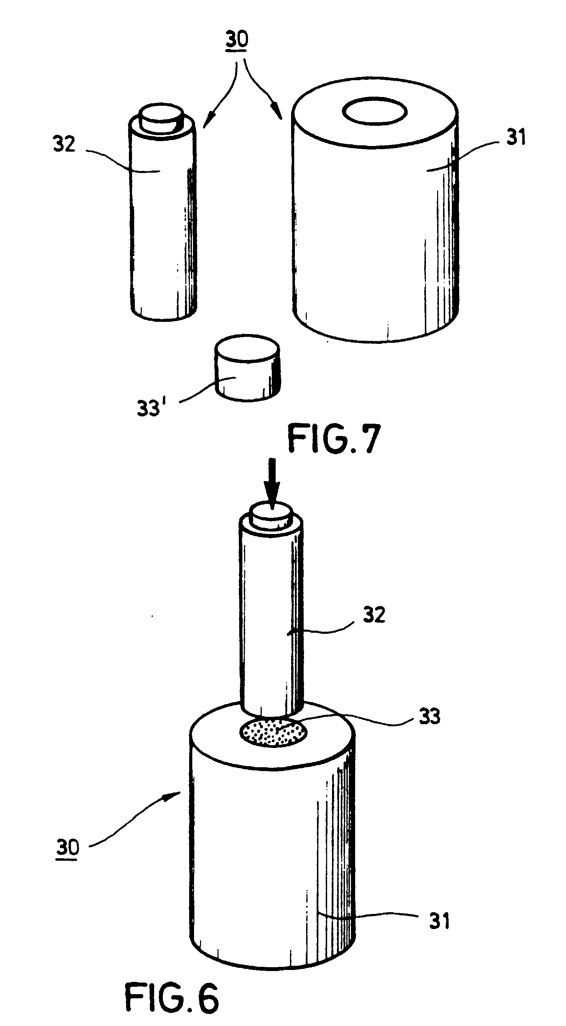

Die Reindichte ist ein wichtiger Mineraldüngerkennwert. Darüberhinaus läßt sich in Verbindung mit der Schwebegeschwindigkeit und dem Korngrößenspektrum ein Zusammenhang zu dem Verhalten der Düngerkörner des Mineraldüngers in der Luftströmung herstellen. Die Messung der Schwebegeschwindigkeit, die weiter unten beschrieben wird, und relativ aufwendig ist, läßt sich durch die einfache Messung der Reindichte und des Korngrößenspektrums ersetzen. Die Reindichte wird mit den in den Fig. 6 und 7 dargestellten Vorrichtung 30 durchgeführt. Diese Vorrichtung 30 besteht aus einem Zylinder 31 mit einem Innendurchmesser von beispielsweise 40 mm und einem Außendurchmesser von beispielsweise 100 mm und einer Höhe von beispielsweise 150 mm. Weiterhin wird ein Kolben 32 mit einem Außendurchmesser von 40 mm und einer Länge von 150 mm verwendet.

Die Messung geschieht folgendermaßen: In den Zylinder 31 wird 100 g Mineraldünger 33 eingefüllt. Dann wird der Kolben 32 in den Zylinder 31 geschoben. Kolben 32 und Zylinder 31 werden dann unter eine Presse gestellt und mit einer Kraft, von beispielsweise 50.000 N zusammengepreßt. Durch diese große Kraft wird der Mineraldünger 33 zu einem sehr festen Zylinder 33', wie Fig. 7 zeigt, komprimiert. Es ist festgestellt worden, daß dann bei einer derartig großen Kraft in diesem Mineraldüngerzylinder 33' keine Luft mehr enthalten ist, so daß man durch Bestimmen von Gewicht, Höhe und Durchmesser des Zylinders 33' die Reindichte des Düngers exakt ermitteln kann. Dieser Wert der Reindichte wird dann in der Datenbank abgelegt.

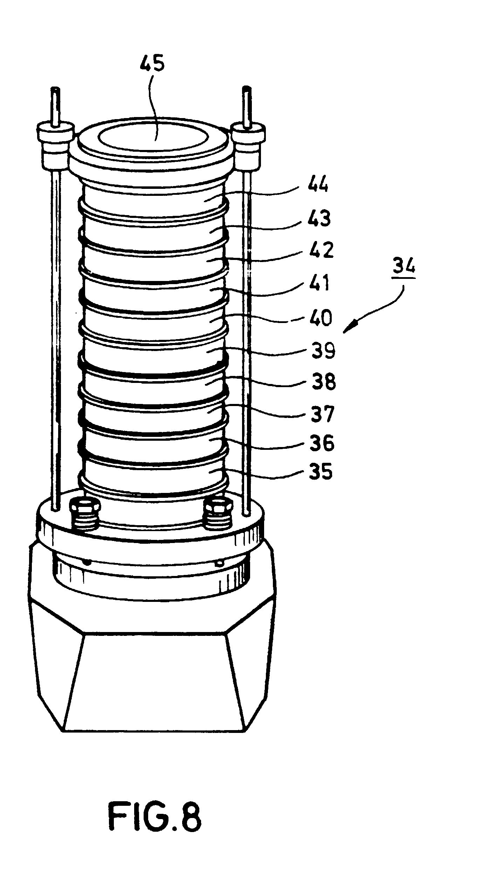

Mittels der in Fig. 8 dargestellten Vorrichtung 34 läßt sich das Korngrößenspektrum feststellen. Das Korngrößenspektrum ist ein äußerst aussagekräftiger charakteristischer Wert für den Dünger. Wie Versuche gezeigt haben, werden Unterschiede über diesen Wert zwischen verschiedenden Mineraldüngersorten und der Mineraldüngerqualität sehr schnell deutlich. Die Korngrößenverteilung gibt eine eindeutige Aussage über den Dünger. Wie Versuche gezeigt haben, hat die Korngrößenverteilung zwar keinen direkten Zusammenhang mit dem Reibverhalten auf der Schleuderschaufel und dem Verhalten des Düngers in der Luftströmung, aber indirekt läßt sich doch ein Zusammenhang mit der Schwebegeschwindigkeit und der Reindichte ein Zusammenhang zwischen Korngrößenverteilung und dem Verhalten in der Luftströmung erstellen. Es ist also möglich, durch die Verwendung der einfach zu ermittelnden Korngrößenverteilung in Verbindung mit der ebenfalls einfach zu ermittelnden Reindichte den charakteristischen Wert für die Schwebegeschwindigkeit zu ersetzen.

Die Bestimmung der Korngrößenverteilung wird nach DIN ISO 8397: feste Düngemittel und Bodenverbesserungsmittel, Siebanalyse (1989) vorgenommen. In dieser DIN sind die erforderlichen Geräte aufgeführt.

Die Fig. 8 zeigt die zu verwendende Schüttelmaschine 34 mit demn aufgesetzten Prüfsieben. Es werden hier Prüfsiebe 35 bis 44 mit den Nennöffnungsweiten 0,5 mm, 1 mm, 1,5 mm, 2 mm, 2,5 mm, 3,15 mm, 3,55 mm, 4 mm, 4,5 mm und 5 mm nach ISO 5650 verwendet. In die Schüttelmaschine 34 ist eine Zeitschaltuhr integriert, so daß auf eine Stoppuhr verzichtet werden kann. Die Schüttelmaschine 34 bietet die Möglichkeit die Schwingungsintensität und die Intervalllängen einzustellen.

Bei der Bestimmung der Korngrößenverteilung wird wie folgt vorgegangen:
Die Prüfsiebe 35 bis 44 werden in der Reinfolge ihrer Nennöffnungsweiten, mit dem kleinsten unten beginnend, auf die Schüttelmaschine aufgesetzt. Dann werden 100 g des zu messenden Mineraldüngers auf das oberste Prüfsieb 44 aufgegeben. Die Menge von 100 g hat den entscheidenden Vorteil, daß die gewogenen Mengen pro Prüfsieb sofort, ohne Rechnung in % angegeben werden kann. Auf das oberste Prüfsieb 44 wird dann der Deckel 45 aufgesetzt. Die Schwingungsdauer nach DIN ISO 8397 wird auf 10 Minuten eingestellt. Nach Ablauf dar eingestellten Zeit werden die auf jedem Prüfsieb 35 bis 44 verbliebenden Mengen auf 0,1 g genau gewogen. Die in den Maschen des Prüfsiebes festgehaltenen Partikel werden mit einer weichen Bürste entfernt. Die so gewonnenen Ergebnisse werden in einer Tabelle festgehalten. Dieser Vorgang wird drei mal durchgeführt. Dann wird für jede Siebfraktion der Mittelwert gebildet. Mit Hilfe eines Pogrammes wird die Häufigkeit und die Summengehäufigkeit, dargestellt über den Korndurchmesser ermittelt. Der charakteristische Wert wird dort festgelegt, wo die Summenhäufigkeitskurve die 50 % Marke erreicht. Außerdem wird der sog. K-Wert definiert. Dieser K-Wert ist der Prozentsatz des Körnergewichtes, der innerhalb der Grenzen 0,8 des mittleren Durchmessers und 1,2 des mitteren Durchmessers liegt. Dieser Wert wird in der Datenbank abgelegt.

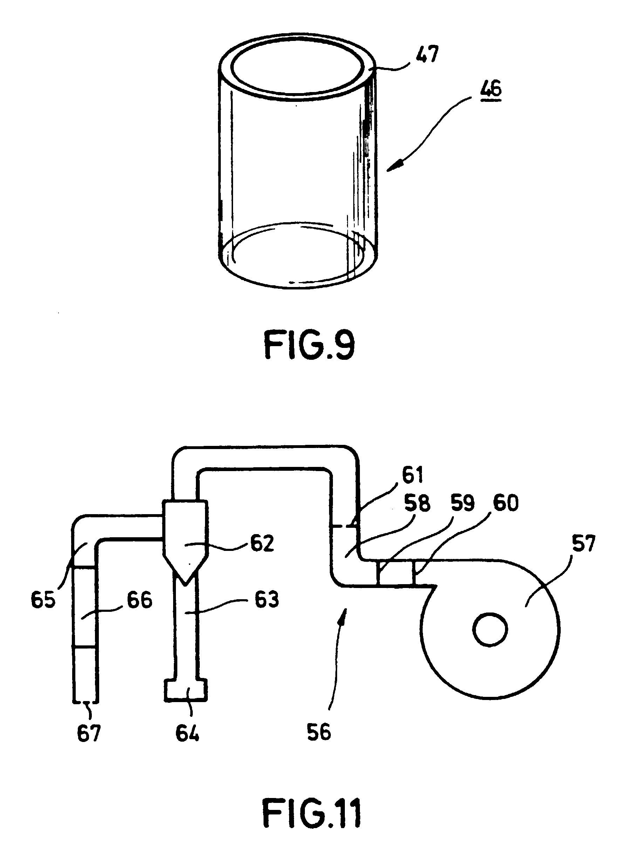

In Fig. 9 ist die Vorrichtung 46 zur Ermittlung der Schüttdichte dargestellt. Die Schüttdichte ist ein sehr einfach zu ermittelnder Kennwert.

Insbesondere grobe und mittlere Unterschiede zwischen den Mineraldüngern lassen sich anhand der Schüttdichte ermitteln und charakterisieren. Für die Bestimmung der Schüttdichte dient beispielsweise ein unten verschlossenes Plexiglasrohr 47, mit einem Durchmesser von beispielsweise 25 mm und einer Länge von 237 mm, so daß das Fassungsvermögen exakt 1 dm³ beträgt. Der Mineraldünger wird mit Hilfe eines Trichters in dieses Rohr 47 geschüttet. Das Rohr 47 wird randvoll gefüllt. Der Inhalt des Rohres wird gewogen und so die Schüttdichte in g pro cm³ ermittelt. Dieser Wert kann bei Bedarf in der Datenbank abgelegt werden.

Mit der in Fig. 10 dargestellten Vorrichtung 48 wird der Schüttwinkel ermittelt. Der Schüttwinkel beschreibt das Reibverhalten der Mineraldüngerkörner untereinander. Der Schüttwinkel wird an einem ruhenden Laufwerk bestimmt. Als reiner Vergleichswert kann er Aufschlüsse über den Dünger geben. Der Schüttwinkel wird mit der Vorrichtung 48 gemäß Fig. 10 durchgeführt. Dieses Gerät 48 besteht aus einem rechteckigen Behälter 49 mit einer durchsichtigen Vorderwand 50. In diesem Behälter sind zwei Bleche 51 angeordnet, die einen Trichter 52 bilden. Zur Bestimmung des Schüttwinkels werden 2dm³ Mineraldünger in den Trichter 52 geschüttet. Der Mineraldünger fließt durch den unteren Auslaß 53 des Trichters 52 auf den Boden 54 und wird dort aufgeschüttet. Es bildet sich so der Schüttkegel 55, wie in Fig. 10 dargestellt, aus. Der spezifische Schüttwinkel wird durch die einfache Messung der Höhe und der Breite errechnet. Dieser Wert kann bei Bedarf in der Datenbank abgelegt werden.

Mit der gemäß Fig. 11 im Prinzip dargestellten Vorrichtung 56 läßt sich die Schwebegeschwindigkeit ermitteltn. Die Schwebegeschwindigkeit gibt eine exakten Aufschluß über das Verhalten der Mineraldüngerkörner in der Luftströmung. Dieses Verhalten in der Luftströmung hat einen entscheidenden Anteil an der Verteilung des Mineraldüngers. Die Ermittlung der Schwebegeschwindigkeit ist sehr aufwendig. Die Schwebegeschwindigkeit 56 wird von der Reindichte, dem Korngrößenspektrum und der Mineraldüngerform beeinflußt. Umfangreiche Versuche haben gezeigt, daß die Schwebegeschwindigkeit in einem linearen Zusammenhang zu der Reindichte und dem mittleren Korndurchmesser steht.

Die Schwebegeschwindigkeit wird mit der Vorrichtung 56, wie in Fig. 11 dargestellt ist, ermittelt. Diese Vorrichtung besteht aus dem Sauggebläse 57, der Rohrleitung 58, dem ersten Schieber 59, sowie dem zweiten Schieber 60, der Blende 61 nach DIN 1952, dem Zyclon 62, der Rohrleitung 63, dem Glasbehälter 64, der Rohrleitung 65, der weiteren durchsichtigen Rohrleitung 66 und dem abnehmbaren Sieb 67. Zusätzlich ist noch zwei Baromentern und eine Waage zur Bestimmung der Schwebegeschwindigkeit erforderlich.

Die Messung der Schwebegeschwindigkeit wird folgendermaßen durchgeführt:
Zunächt werden 200 g Mineraldünger in das abnehmbare Sieb 67 gefüllt. Das Sieb 67 wird unter der senkrechten Rohrleitung 66 befestigt. Beide Schieber 59 und 60 sind geschlossen. Das elektrisch angetriebene Sauggebläse 57 wird eingeschaltet und der erste Schieber 59 wird ganz geöffnet. Nun wird der zweite Schieber 60 mit der nicht dargestellten Kurbel langsam geöffnet. Nach einigen Umdrehungen der Kurbel entsteht Unruhe im Mineraldünger im Sieb 67. Nach weiteren Kurbelumdrehungen werden die ersten Körner fortgesogen, im Zyclon 62 abgeschieben und fallen dann in den Glasbehälter 64. Im durchsichtigen Teil der Rohrleitung 66 läßt sich das Verhalten des Mineraldüngers in dem Luftstrom beobachten.

Wenn ungefähr 5 % des Mineraldüngers aus dem Sieb 67 abgeschieden worden sind, wird der erste Meßpunkt aufgenommen. Hierfür wird mit einem Barometer die Druckdifferenz über die Blende 61 und mit dem anderen Barometer der Druck in Strömungsrichtung vor der Blende 61 bestimmt. Der Schieber 59 wird ganz geschlossen. In der Rohrleitung herrscht wieder der Umgebungsdruck. Der Mineraldünger, der in der Rohrleitung 65 und 66 schwebte fällt wieder auf das Sieb 67. Der im Glasbehälter 64 aufgefangene Mineraldünger wird gewogen und dann wieder in das Sieb 67 gefüllt. Jetzt wird der Schieber 59 wieder langsam geöffnet. Der Mineraldünger, der schon abgeschieden war, wird jetzt wieder vom Luftstrom fortgesogen und im Zyclon 62 erneut abgeschieden. Der Schieber 60 wird langsam weiter geöffnet, bis genug Mineraldünger abgeschieden wurde, um einen zweiten Meßpunkt aufnehmen zu können. Auf diese Weise werden 10 bis 15 Meßpunkte pro Mineraldüngersorte aufgenommen. Aus den gemessenen Druckwerte werden die zugehörigen Strömungsgeschwindigkeiten nach DIN 1952 ermittelt. Aus den ermittelten Kurvenverläufen wird die mittlere Schwebegeschwindigkeit ermittelt. Die mittlere Schwebegeschwindigkeit ist als die Geschwindigkeit definiert, bei der 50 % des Mineraldüngers vom Zyclon abgeschieden worden sind. Dieser Wert wird dann bei Bedarf in die Datenbank eingetragen.

## Patentansprüche

1. Verfahren zur Ermittlung der für eine gewünschte Streubreite und Streumenge benötigten Einstellwerte eines Düngerstreuers (2) für eine Düngersorte,
**gekennzeichnet durch**
die folgenden Schritte:
1. es werden zunächst im Großversuch mit einem Düngerstreuer (2) für verschiedene Düngersorten die für verschiedene Streuund/oder Arbeitsbreiten und Streumengen erforderlichen Einstellwerte dieses Düngerstreuers ermittelt und auf einem Datenträger festgehalten;
2. es werden gleichzeitig mit mengenmäßig wesentlich kleineren, Gramm/Kilogramm-Bereich, Proben der jeweiligen Düngersorte wenigstens zwei düngerspezifische Werte nämlich das Reibrollverhalten (B) und als weiterer wenigstens einer der folgenden Werte Schwebegeschwindigkeit (G), Reindichte (C), Schüttdichte (E), Korngrößenspektrum (D), und/oder Schüttwinkel (F) ermittelt und
3. es werden dann diese düngerspezifischen Werten (A, B, C, D, E, F, G) dem im parallelen Großversuch für diese Sorte ermittelten Einstellwerten zugeordnet und auf einem Datenträger festgehalten;
4. es werden dann bei Vorlage einer hinsichtlich ihrer physikalischen Eigenschaften unbekannten Düngersorte anhand von Proben, entsprechend Schritt 2, dieser Sorte die enigstens zwei düngerspezifische Werte entsprechend Schritt 2, für diese Sorte ermittelt und
5. es werden dann für die unter 4, ermittelten düngerspezifischen Werte die zugehörenden, auf dem Datenträger festgehaltenen Einstellwerte für den Düngerstreuer entnommen.

2. Verfahren nach Anspruch 1, dadurch gekennzeichnet, daß die ermittelten spezifischen Werte (B,C,D,E,F,G) und die ermittelten Einstellwerte für jeden Dünger bzgl. der Arbeitsbreite in einen Speicher eines Rechners (4) oder in Tabellen abgelegt werden, daß die aktuell ermittelten spezifischen Werte mit den abgelegten spezifischen Werte verglichen werden, und daß nach dem Vergleich auf die aktuellen Einstellwerte des Düngerstreuers (8) für den aktuell auszubringenden Dünger geschlossen wird.

3. Verfahren nach Anspruch 1 oder 2, dadurch gekennzeichnet, daß der Rechner anhand der ermittelten düngerspezifischen Werte die zu erwartende Verteilung des Düngers über die vorgesehene Arbeitsbreite berechnet und/oder darstellt.

4. Verfahren nach wenigstens einem der vorangehenden Ansprüche, dadurch gekennzeichnet, daß der Rechner bei Errechnung mehrerer möglicher Einstellwerte für den Düngerstreuer automatisch zur Erzielung einer optimalen, gleichmäßigen Düngerverteilung einen Mittelwert der Einstellwerte berechnet.

5. Verfahren nach wenigstens einem der vorangehenden Ansprüche, dadurch gekennzeichnet, daß der Rechner die zu erwartende Verteilung des Düngers mit einem zu erwartendem Variationskoeffizienten angibt.

6. Vorrichtung zur Ermittlung der für eine gewünschte Streubreite und Streumenge benötigten Einstellwerte, eines Düngerstreuers **gekennzeichnet** durch
1. einen Datenträger, auf dem für einen Düngerstreuer im Großversuch für verschiedene Düngersorten ermittelte Einstellwerte und dazugehörige anhand von kleinen Proben dieser Düngersorte ermittelte düngerspezifische Werte festgehalten sind, durch
2. wenigstens zwei Meßvorrichtungen, (11,19,30,34,46,48,56), mit denen anhand von mengenmäßig kleinen Proben, Gramm/Kilogramm-Bereich, wenigstens zwei düngerspezifische Werte nämlich das Reibrollverhalten halten (B), und als weite wenigstens einen der folgenden Werte Schwebegeschwindigkeit (G), Reindichte (C), Schüttdichte (E), Korngrößenspektrum (D), und/oder Schüttwinkel (F) ermittelbar sind und durch
3. Mittel, mit denen für die ermittelten düngerspezifischen Werte die zugehörenden auf dem Datenträger festgehaltenen Einstellwerte entnehmbar sind.

7. Vorrichtung nach Anspruch 6, dadurch gekennzeichnet, daß die Meßvorrichtung eine als Korngrößenspektrummeßvorrichtung (34) ausgebildete Siebvorrichtung ist.

## Claims

1. Method of determining the setting values of a fertiliser broadcaster (2) which are required for a desired broadcasting width and broadcasting quantity for one type of fertiliser, characterised by the following steps:
1. the setting values of a fertiliser broadcaster (2), which are required for various broadcasting and/or working widths and broadcasting quantities, are initially determined in a large-scale experiment with this fertiliser broadcaster for various types of fertiliser and are recorded on a data carrier;
2. at least two values specific to the fertiliser, namely the friction roller behaviour (B), and, as an additional value, at least one of the following values: suspension rate (G), net density (C), bulk density (E), particle size spectrum (D) and/or angle of repose (F), are simultaneously determined with quantitatively substantially smaller samples, in a gramme/kilogramme range, of the particular type of fertiliser; and
3. these values (B, C, D, E, F, G) specific to the fertiliser are then associated with the setting values determined for this type in the parallel large-scale experiment and recorded on a data carrier;
4. if a type of fertiliser is present which is unknown in respect of its physical properties, the at least two values specific to the fertiliser are then determined for this type with reference to samples, corresponding to step 2, of this type; and
5. the associated setting values, which are recorded on the data carrier, for the fertiliser broadcaster are then derived for the values which are determined under 4. and are specific to the fertiliser.

2. Method according to claim 1, characterised in that the determined specific values (B, C, D, E, F, G) and the determined setting values for each fertiliser in respect of the working width are deposited in a memory of a computer (4) or in tables, in that the actually determined, specific values are compared with the deposited specific values, and in that, after the comparison, a conclusion is reached about the actual setting values of the fertiliser broadcaster (8) for the fertiliser actually to be distributed.

3. Method according to claim 1 or 2, characterised in that the computer calculates and/or displays the distribution of the fertiliser to be expected over the envisaged working width with reference to the determined values specific to the fertiliser.

4. Method according to at least one of the preceding claims, characterised in that, when calculating a plurality of possible setting values for the fertiliser broadcaster, the computer automatically calculates a mean value of the setting values to achieve an optimim, uniform distribution of fertiliser.

5. Method according to at least one of the preceding claims, characterised in that the computer indicates the distribution of the fertiliser to be expected with a variation coefficient to be expected.

6. Apparatus for determining the setting values of a fertiliser broadcaster which are required for a desired broadcasting width and broadcasting quantity, characterised by
1. a data carrier, on which are recorded setting values, determined for a fertiliser broadcaster in a large-scale experiment for various types of fertiliser, and associated values which are determined with reference to small samples of this type of fertiliser and are specific to the fertiliser; by
2. at least two measuring devices (11, 19, 30, 34, 46, 48, 56), by means of which at least two values specific to the fertiliser, namely the friction roller behaviour (B), and, as an additional value, at least one of the following values: suspension rate (G), net density (C), bulk density (E), particle size spectrum (D) and/or angle of repose (F), are determinable with reference to quantitatively small samples, in a gramme/kilogramme range; and by
3. means, whereby the associated setting values, recorded on the data carrier, are derivable for the determined values specific to the fertiliser.

7. Apparatus according to claim 6, characterised in that the measuring device is a screening device in the form of a particle size spectrum measuring device (34).

## Revendications

1. Procédé pour déterminer les valeurs de réglage d'un épandeur d'engrais (2) correspondant à un type d'engrais, pour obtenir la largeur d'épandage et la quantité d'épandage voulues,
caractérisé par les étapes suivantes,
1. on effectue tout d'abord par des essais en grand, avec un épandeur d'engrais (2) appliqué à différents types d'engrais, pour les différentes largeurs d'épandage et/ou de travail et les différentes quantités d'épandage, les valeurs de réglage nécessaires pour cet épandeur d'engrais et on les enregistre dans un support de données,
2. en même temps, on détermine avec des échantillons de quantités beaucoup plus petites, de l'ordre du gramme/kilogramme, correspondant aux différents types d'engrais, au moins deux valeurs spécifiques d'engrais, dont le comportement au roulement avec friction (B), et comme autre valeur au moins l'une des valeurs suivantes : la vitesse de flottement (G), la densité nette (C), la densité apparente (E), le spectre de granulométrie (D),
et/ou l'angle de talus (F), et
3. on associe alors ces valeurs caractéristiques de l'engrais (B, C, D, E, F, G) aux valeurs de réglage déterminées pour ce type d'engrais dans l'essai en grand effectué en parallèle et on enregistre sur un support de données,
4. en présence d'un type d'engrais dont les caractéristiques physiques ne sont pas connues, à l'aide d'échantillons, en procédant comme à l'étape 2, on détermine au moins deux valeurs caractéristiques de ce type d'engrais selon l'étape 2 pour ce type d'engrais, et
5. pour les valeurs caractéristiques de l'engrais déterminées selon le point 4, on prend dans le support de données les valeurs de réglage enregistrées correspondantes pour l'épandeur d'engrais.

2. Procédé selon la revendication 1,
caractérisé en ce qu'
on enregistre les valeurs spécifiques (B, C, D, E, F, G) et les valeurs de réglage déterminées pour chaque engrais, ou la largeur de travail, dans une mémoire d'un calculateur (4) ou dans des tableaux, on compare la valeur caractéristique présente, déterminée avec les valeurs caractéristiques inscrites et, après la comparaison, on détermine les valeurs de réglage présentes de l'épandeur d'engrais (8) pour l'engrais à distribuer maintenant.

3. Procédé selon la revendication 1 ou 2,
caractérisé en ce que
le calculateur calcule à l'aide des valeurs caractéristiques de l'engrais, déterminées, la distribution prévisible de l'engrais sur la largeur de travail prévue, et/ou on l'affiche.

4. Procédé selon au moins l'une des revendications précédentes,
caractérisé en ce que
lors du calcul pour plusieurs valeurs de réglage possibles correspondant à un même épandeur d'engrais, le calculateur détermine automatiquement une valeur moyenne des valeurs de réglage pour obtenir une répartition optimale, régulière de l'engrais.

5. Procédé selon au moins l'une des revendications précédentes,
caractérisé en ce que
le calculateur indique la distribution prévisible de l'engrais avec un coefficient de variation prévisible.

6. Dispositif pour déterminer les valeurs de réglage d'un épandeur d'engrais, nécessaires pour obtenir la largeur d'épandage et la quantité d'épandage voulues,
caractérisé par,
1. un support de données qui reçoit les valeurs de réglage déterminées pour chaque type d'engrais lors d'essais en grand avec un épandeur d'engrais, et les valeurs caractéristiques de l'engrais déterminées pour ce type d'engrais à l'aide de petits échantillons, et
2. au moins deux dispositifs de mesure (11, 19, 30, 34, 46, 48, 56) à l'aide desquels, en partant d'échantillons en quantités relativement petites (du domaine du gramme/kilogramme) on détermine au moins deux valeurs caractéristiques de l'engrais, dont le comportement au roulement avec friction (B), et comme autre valeur au moins l'une des valeurs suivantes : la vitesse de flottement (G), la densité nette (C), la densité apparente (E), le spectre de granulométrie (D), et/ou l'angle de talus (F), et
3. des moyens à l'aide desquels on peut prendre pour les valeurs caractéristiques, déterminées, les valeurs de réglage correspondantes enregistrées sur le support de données.

7. Dispositif selon la revendication 6,
caractérisé en ce que
le dispositif de mesure est un dispositif à tamis constituant un dispositif servant à déterminer le spectre de granulométrie (34).
